# EUROPÄISCHE PATENTSCHRIFT

(11) **EP 2 189 016 B1**
(45) Veröffentlichungstag und Bekanntmachung des Hinweises auf die Patenterteilung: **09.01.2019**
(21) Anmeldenummer: 08773701.1
(22) Anmeldetag: 26.06.2008
(51) Int. Cl.: H04W 64/00, H04W 60/00

(54) **VERFAHREN ZUR ENDGERÄTE-BASIERTEN ERKENNUNG VON HOME-BASISSTATIONEN IN EINEM ZELLULAREN MOBILFUNKSYSTEM MITTELS UNTERSTÜTZUNG DURCH DAS MOBILFUNKNETZ**
METHOD FOR THE TERMINAL-BASED RECOGNITION OF HOME BASE STATIONS IN A CELLULAR MOBILE RADIO SYSTEM BY MEANS OF SUPPORT BY THE MOBILE RADIO NETWORK
PROCÉDÉ D'IDENTIFICATION, SUR LA BASE DE TERMINAUX, DE STATIONS DE BASE D'ATTACHE DANS UN SYSTÈME DE TÉLÉPHONIE MOBILE CELLULAIRE À L'AIDE D'UNE ASSISTANCE PAR LE RÉSEAU DE TÉLÉPHONIE MOBILE

(30) Priorität: 21.09.2007 DE 102007045408
(43) Veröffentlichungstag der Anmeldung: 26.05.2010
(73) Patentinhaber: Deutsche Telekom AG, 53113 Bonn (DE)
(72) Erfinder: KLATT, Axel, 50996 Köln (DE); SCHMITT, Harald, 56170 Bendorf (DE)
(74) Vertreter: Cohausz, Helge B.
(86) Internationale Anmeldenummer: PCT/EP2008/005226
(87) Internationale Veröffentlichungsnummer: WO 2009/039904

(56) Entgegenhaltungen:
- EP-A- 0 858 237
- EP-A- 0 915 631
- EP-A- 1 737 257
- WO-A-00/18156
- US-A- 6 167 285

## Beschreibung

Die Erfindung betrifft ein Verfahren zur geografischen Lokalisierung eines Mobilfunkendgerätes innerhalb eines zellularen Mobilfunknetzes, bei dem jede Zelle des Mobilfunknetzes anhand einer Kennung enthaltend eine Zellidentifikation und eine Gebietsidentifikation identifizierbar ist und wobei eine Kennung ausgesendet wird und wobei das Mobilfunkendgerät geeignet ist, derartige Kennungen zu empfangen und zu verarbeiten und eine oder mehrere Kennungen abzuspeichern, wobei eine geografische Lokalisierung des Mobilfunkendgerätes innerhalb des zellularen Mobilfunknetzes durch einen Vergleich der aktuell empfangenen Kennung mit einer oder mehreren abgespeicherten Kennungen erfolgt.

Ein derartiges Verfahren ist aus der internationalen Anmeldung WO 00/18156 A bekannt, die die Mitteilung einer Änderung einer Funktionalität einer Zelle an ein Mobilfunkendgerät betrifft. Aus der europäischen Patentanmeldung EP 1737257 A1 ist die Speicherung der Kennung eines Netzwerkteilbereichs mit einem oder mehreren Platzhaltern bekannt.

Die vorliegende Erfindung betrifft insbesondere ein Verfahren bzw. eine Anordnung zur Realisierung einer optimierten terminalbasierten Suchfunktion eines Mobilfunkendgerätes in einem zellularen Mobilfunksystem, beispielsweise nach GERAN, UTRAN, E-UTRAN, cdma2000, UMB, WiMAX, etc. Standard, zum Auffinden einer nutzbaren Home-Basisstation unter Vermeidung einer kontinuierlichen oder periodischen Suche durch die Bereitstellung von Zusatzinformationen über die Änderung der Konfiguration des Mobilfunknetzes durch das Mobilfunknetz selbst.

Die Installation so genannter "Home-Basisstationen" (auch Home-BTS, Home-BS, HBS, Home-eNB, CSG cells etc genannt) in einem zellularen Mobilfunksystem ist bekannt. Diese werden in einem der typischen Hauptanwendungsfälle als Erweiterung eines öffentlichen zellularen Mobilfunksystems in nicht oder schlecht versorgten Innenbereichen (bzw. Wohnungen, Häuser, Büros) genutzt. Können aber aus anderen Gründen auch bei ausreichender Versorgung durch das Mobilfunknetz genutzt werden. Eine Anbindung derartiger Home-BS mit dem zellularen Mobilfunksystem des Betreibers (PLMN) wird üblicherweise per xDSL oder Ethernet etc. realisiert. Ein weiteres typisches Merkmal dieser Art von Home-BS ist die Tatsache, dass nur eine eingeschränkte Zahl von registrierten Nutzern der Zugang auf diese Home-BS erlaubt ist. Ein typischer Anwendungsfall ist die Nutzung der Home-BS in einem Eigenheim, Wohnung oder in einem Ferienhaus, zu der nur eine eingeschränkte Anzahl von registrierten Mobilfunkkunden des Mobilfunknetzes (PLMNs) Zugang hat. Dieses könnte beispielsweise eine 4-köpfige Familie sein.

Bezüglich der Regelung des Zugangs auf Home-BS sind folgende Optionen bekannt:

### - Verschiedene Netzwerkkennungen (PLMN IDs) innerhalb des Mobilfunksystems

Die Home-BS verwenden eine vom öffentlichen Mobilfunknetz unterschiedliche Netzwerkkennung (PLMN ID). Lediglich die registrierten Nutzer dürfen die Home-BS nutzen. Für öffentliche Nutzer ist die Nutzung der Netzwerkkennung und somit der Home-BS verboten.

Nachteile dieser Option liegen darin, dass die Anzahl der PLMN IDs stark begrenzt ist und somit eine Unterscheidung mehrerer Home-BS zusätzliche Lösungen erfordert. Weiterhin ist der Stromverbrauch der Endgeräte, welche die registrierten Nutzer verwenden, entsprechend erhöht, da die periodische Netzwerksuche auf ein kurzes Intervall eingestellt ist. Dies ist notwendig, um den Zeitraum vom Erreichen des Aufenthaltsortes der Home-BS bis zur eigentlichen Nutzung der Home-BS zu minimieren. Weitere Nachteile dieser Option liegen in erhöhtem administrativen Aufwand, welcher der Netzbetreiber aufbringen muss um die zusätzliche PLMN ID aufzunehmen.

### - Normale Zellwechsel ohne eigene Mobilfunknetzkennung

Eine weitere Option zur Steuerung des Zugangs einer Home-BS liegt darin, die normalen Mobilitätsprozeduren innerhalb einer Netzwerkkennung zu verwenden. Dazu ist die Home-BS in das öffentliche Mobilfunknetz zu integrieren und entsprechende Nachbarschaftsbeziehungen wie zwischen allen anderen Zellen des Mobilfunknetzes, zu dem öffentlichen Mobilfunknetz einzurichten. Die Steuerung zum Wechsel zwischen dem öffentlichen Mobilfunknetz und der Home-BS erfolgt durch geeignete Parametrisierung des Zell Reselektionsprozesses. Weiterhin können öffentliche Nutzer auf der Home-BS abgelehnt werden.

Wesentlicher Nachteil dieser Option liegt darin, dass die Batterielaufzeit der Mobilfunkendgeräte der öffentlichen Nutzer negativ beeinträchtigt wird, da diese oftmals Zellen der nicht zu nutzenden Home-Basisstationen messen müssen. Weiterhin ist der Aufwand zur Integration vieler Home-BS in ein öffentliches Mobilfunknetz relativ aufwendig. Dieser Aufwand steigt zusätzlich überproportional, wenn Mobilität der eigentlichen Home-BS an sich erlaubt wird; z. B. der Besitzer der Home-BS diese regelmäßig zwischen seiner Ferienwohnung und seinem Eigenheim wechselt. Das Verfahren der Verwendung der normalen Zellwechsel Prozeduren findet beispielsweise bei UMA ("Unlicensed Mobile Access") oder "Generic Access" Anwendung.

### - Abspeicherung von Zelldaten des Makronetzes um Suche nach Home-BS zu vermeiden

Eine weitere Möglichkeit liegt in der Speicherung eines "Cell-Fingerprint" im Mobilfunkendgerät. Ein Mobilfunkendgerät speichert Zellinformationen mehrerer Sendestationen des öffentlichen Mobilfunknetzes in der geografischen Lage der eigenen Home-BS. Das Mobilfunkendgerät vergleicht periodisch die aktuelle Netzkonfiguration des öffentlichen Mobilfunknetzes mit dem gespeicherten "Cell-Fingerprint". Sobald das Mobilfunkendgerät eine Übereinstimmung feststellt befindet sich das Mobilfunkendgerät in der geografischen Nähe oder ggf. sogar bereits in der Reichweite der Home-BS und das Endgerät starte die Suche der Home-BS.

Dieses nach dem heutigen Stand der Technik genutzte Verfahren setzt auf eine statistische Wahrscheinlichkeit, dass innerhalb eines zellularen Mobilfunksystems (PLMN), eine derartige Zellkonstellation einmalig ist (oder zumindest eine sehr niedrige Wahrscheinlichkeit besteht, exakt die gleiche Konstellation nochmals an anderer geografischer Position innerhalb des Mobilfunknetzes nochmals zu finden). Bei der Methode des "Cell Fingerprint" ist der wesentliche Nachteil darin zu sehen, dass die Erneuerung des "Cell-Fingerprints", notwendig durch Änderungen von Zellkonfiguration durch den Netzbetreiber, heute nur manuell durch den Benutzer eines Mobilfunkendgerätes erfolgen kann, wobei der Benutzer im Normalfall jedoch nicht über Netzwerkumkonfigurationen des Mobilfunkbetreibers informiert wird; typischerweise merkt der Nutzer diese Änderung erst, wenn sein Mobilfunkendgerät die eigene Home-BS nicht automatisch wiederfindet.
Der entscheidende Nachteil des Standes der Technik ist, dass eine Änderung der Konfiguration des Macrozellen-Netzwerkes in der Umgebung des Standortes der Home-BS die Suche nach der Home-BS nicht anstoßen wird, weil der zur Suche verwendete "Cell Fingerprint" nicht gefunden wird.
Die der Erfindung zugrunde liegende Aufgabe ist es, ein Verfahren bereitzustellen, welches auch bei einer Änderung der Kennung einer Zelle oder bei einer Änderung der Kennung eines Gebietes in einem zellularen Mobilfunknetz zuverlässig eine geografische Lokalisierung des Mobilfunkendgerätes innerhalb des zellularen Mobilfunknetzes gestattet, welches beispielsweise zu Widerauffinden der eigenen Home-BS durch das Mobilfunkendgerät genutzt werden kann.
Diese Aufgabe wird erfindungsgemäß gelöst durch ein Verfahren gemäß Anspruch 1 sowie ein Computerprogrammprodukt gemäß Anspruch 10. Ausgestaltungsformen und/oder Beispiele der folgenden Beschreibung, welche nicht durch die anhängenden Ansprüche abgedeckt sind, werden nicht als Teil der vorliegenden Erfindung betrachtet. Besonders vorteilhaft ist dabei, dass bei einem Verfahren zur geografischen Lokalisierung eines Mobilfunkendgerätes innerhalb eines zellularen Mobilfunknetzes, bei dem jede Zelle des Mobilfunknetzes anhand einer Kennung enthaltend eine Zellidentifikation und eine Gebietsidentifikation identifizierbar ist und wobei eine Kennung ausgesendet wird und wobei das Mobilfunkendgerät geeignet ist, derartige Kennungen zu empfangen und zu verarbeiten und eine oder mehrere Kennungen abzuspeichern, wobei eine geografische Lokalisierung des Mobilfunkendgerätes innerhalb des zellularen Mobilfunknetzes durch einen Vergleich der aktuell empfangenen Kennung mit einer oder mehreren abgespeicherten Kennungen erfolgt, wobei bei einer Modifikation der Zellidentifikation und/oder der Gebietsidentifikation der Kennung einer Zelle eine Zusatzinformation an das Mobilfunkendgerät übermittelt wird und die Suche nach der Home-BS trotz Änderung der Macrozellen des Mobilfunknetzes angestoßen wird und nach Widerauffinden der gesuchten Home-BS die neuen Zellidentifikation bzw. Gebietsidentifikation anstelle der alten Zellidentifikation bzw. Gebietsidentifikation abgespeichert werden. Diese werden anschließend anstelle der alten Kennungen zur Suche nach der Home-BS herangezogen.

Weitere vorteilhafte Ausgestaltungen der Erfindung sind in den Unteransprüchen angegeben.

Vorteilhaft ist es, wenn bei Identifikation einer in dem Mobilfunkendgerät abgespeicherten geografischen Position eine Suche des Mobilfunkendgerätes nach einer Basisstation ausgelöst wird. Hierdurch kann in periodischen Abständen eine Lokalisierung stattfinden, wobei die Suche nach einer Home-Basisstation nur dann ausgelöst wird, wenn eine gespeicherte Position in geografischer Nähe bzw. Reichweite der Home-Basisstation identifiziert wurde.

Weiterhin vorteilhaft ist es, wenn die von dem zellularen Mobilfunknetz an das Mobilfunkendgerät übermittelten Kennungen zusätzliche geografische Informationen aufweisen.

Vorzugsweise wird bei Empfang einer eine Modifikation einer Identifikation anzeigende Zusatzinformation eine Suche des Mobilfunkendgerätes nach einer Basisstation ausgelöst.

Vorteilhaft ist es, wenn die Zusatzinformation eine Modifikation der Zellidentifikation einer Makrozelle in dem zellularen Mobilfunknetz anzeigt.

Vorteilhaft ist es, wenn die Zusatzinformation eine Modifikation der Gebietsidentifikation einer Makrozelle in dem zellularen Mobilfunknetz, insbesondere eine Modifikation der Tracking Area Identität (TAI) oder der Location Area Identität (LAI) oder der Routing Area Identität (RAI) einer Makrozelle in dem zellularen Mobilfunknetz, anzeigt.

Bevorzugt werden die Zusatzinformation jeweils nach einer Modifikation einer Zellidentifikation und/oder einer Gebietsidentifikation auf einem Broadcastkanal BCH des zellularen Mobilfunknetzes übermittelt.

Vorzugsweise wird die Zusatzinformation nicht in binärer Form sondern in inkrementer Form umfassend zumindest zwei Werte übertragen.

Vorzugsweise wird zumindest eine Kennung einer bestimmten Zelle zur Identifikation einer geografischen Position in der Reichweite einer bestimmten Basisstation in dem Mobilfunkendgerät abgespeichert.

In einer bevorzugten Ausführungsform handelt es sich bei dem Mobilfunkendgerät um eine Basisstation, die eine computernetzbasierte Verbindung zu dem Mobilfunknetz aufweist, wobei die Basisstation bei der Detektion eines Ortswechels der Basisstation deaktiviert wird.

Des weiteren betrifft die Erfindung ein Computerprogrammprodukt umfassend ein auf einer Recheneinheit lauffähiges Computerprogramm, welches das erfindungsgemäße Verfahren nach einem der Ansprüche 1 bis 10 durchführt, wenn es auf einer Recheneinheit ausgeführt wird.

Besonders vorteilhaft ist die netzwerkseitige Unterstützung der Suchfunktion eines Mobilfunkendgerätes, welches es dem Mobilfunkendgerät ermöglicht, trotz einer Änderung der Konfiguration des Macrozellen-Netzwerkes eine intelligente Suchfunktion zu realisieren und dennoch bei Änderung des Macrozellen-Netzwerkes in der geografischen Nähe des Home-BS Standortes ein zuverlässiges Wiederfinden der eigenen Home-BS zu gewährleisten.

Besonders vorteilhaft ist es, wenn ein gespeicherter "Cell-Fingerprint" in einem Mobilfunkendgerät automatisch erneuert wird für den Fall, dass die Zellinformationen durch den Netzbetreiber geändert werden.

Voraussetzung für die Anwendung des vorgeschlagenen erfindungsgemäßen Verfahrens ist die Nutzung von Zellinformationen bzw. Gebietsinformationen des zellularen Mobilfunksystems (Macrozellen) für die intelligente Unterstützung der Suchfunktion des Mobilfunkendgerätes.

Die Erfindung wird nachfolgend anhand von Figuren erläutert. Es zeigen:

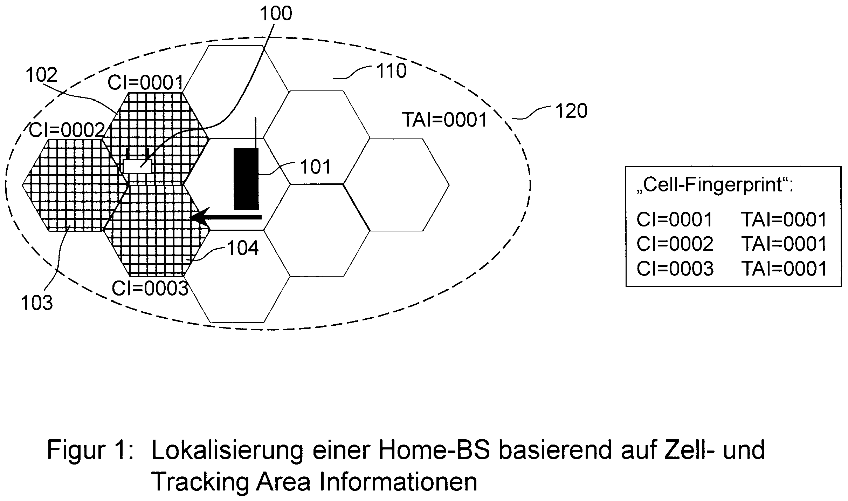

- Fig. 1:: Eine schematische Darstellung der Lokalisierung eines Mobilfunkendgerätes in einem zellularen Mobilfunknetz;

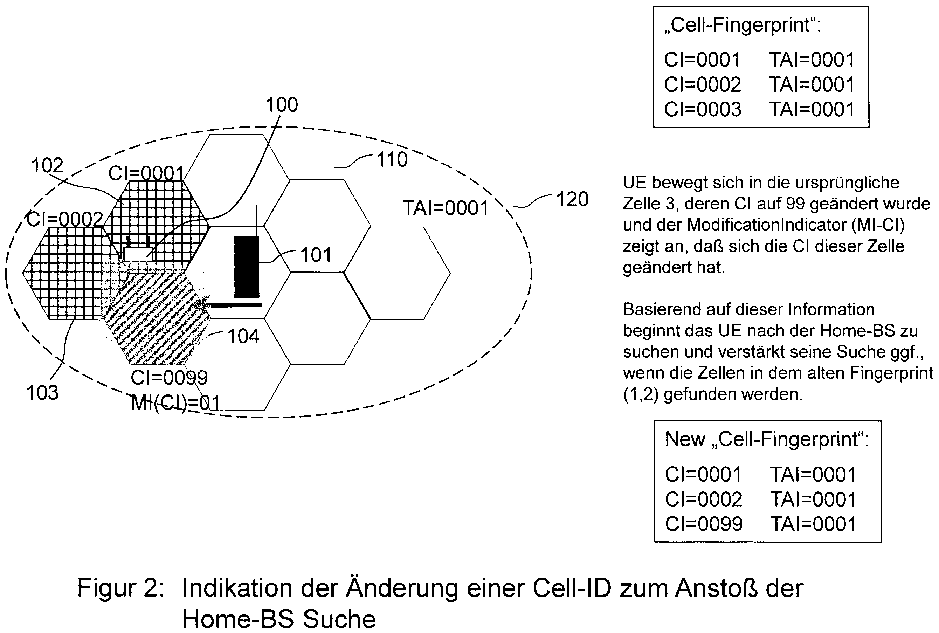

- Fig. 2:: Eine schematische Darstellung der Indikation einer Änderung einer Zellidentifikation CI;

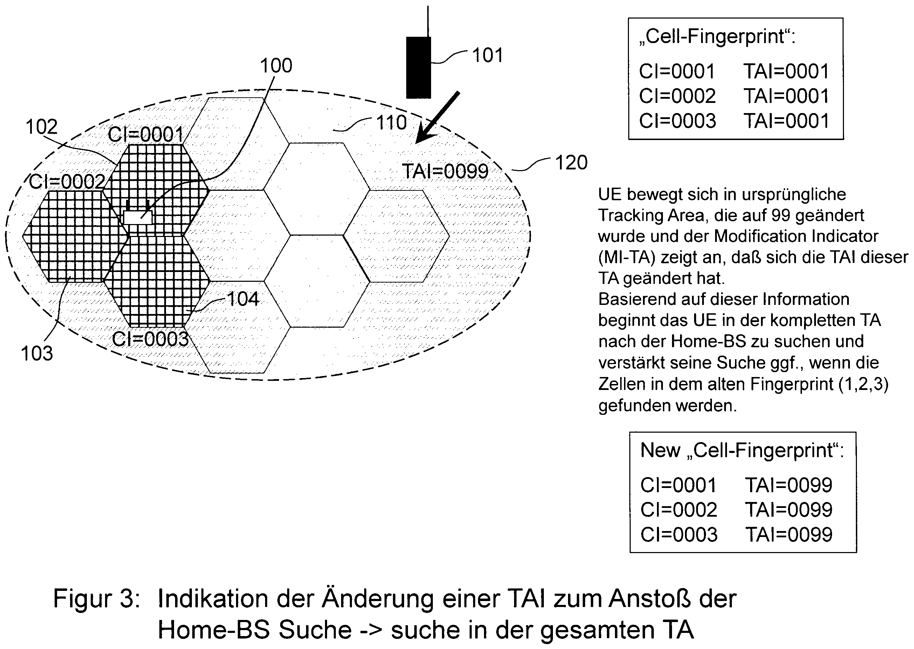

- Fig. 3:: Eine schematische Darstellung der Indikation einer Änderung einer Gebietsidentifikation TAI;
- Fig. 4:: Den schematischen Ablauf des erfindungsgemäßen Verfahrens.

Wenn ein Mobilfunkendgerät 101 beispielsweise in der geografischen Nähe der eigenen Home-BS 100 Informationen von sechs Zellen des Macrozellen-Netzwerkes 110 als "Cell Fingerprint" mit Cell Identity (CI) und Tracking Area Identity (TAI) (im Fall von E-UTRAN, andernfalls eine entsprechende Gebietsinformation wie Location Area (LA) bei UMTS oder GSM) abgespeichert hat, wäre eine Zellkonstellation wie nachfolgend illustriert der Auslöser für das Mobilfunkendgerät, nach der eigenen Home-BS 100 zu suchen:

**Typischer "Cell Fingerprint" in der Umgebung der eigenen Home-BS:**

| | |
|---|---|
| CI = 00001 | TAI = 00001 |
| CI = 00002 | TAI = 00001 |
| CI = 00003 | TAI = 00001 |
| CI = 00004 | TAI = 00001 |
| CI = 00005 | TAI = 00002 |
| CI = 00006 | TAI = 00002 |

Dieses nach dem heutigen Stand der Technik genutzte Verfahren setzt auf eine statistische Wahrscheinlichkeit, dass innerhalb eines zellularen Mobilfunksystems (PLMN), eine derartige Zellkonstellation einmalig ist (oder zumindest eine sehr niedrige Wahrscheinlichkeit besteht, exakt die gleiche Konstellation nochmals an anderer geografischer Position innerhalb des Mobilfunknetzes nochmals zu finden). Wesentlicher Nachteil dieses Verfahrens ist die Tatsache, dass eine Änderung der Macrozellen-Konstellation (beispielsweise des Ändern einer einzigen Cell ID die für den Cell Fingerprint genutzt wurde), ausreicht, dass das Mobilfunkendgerät die zur Suche verwendete Zell-Konstellation niemals wieder findet und somit auch keine Suche nach dem Home-BS anstößt.

Um diesen Nachteil zu vermeiden wird erfindungsgemäß vorgeschlagen, dass das Macrozellen-Netzwerk 110 dem Mobilfunkendgerät 101 eine Unterstützung zur Verfügung stellt, für den Fall, daß sich Parameter wie Cell Id und / oder TAI der Macrozelle 102, 103, 104 geändert haben, um trotz dieser Änderung eine Suche nach der Home-BS 100 durch das Mobilfunkendgerät 101 anzustoßen.

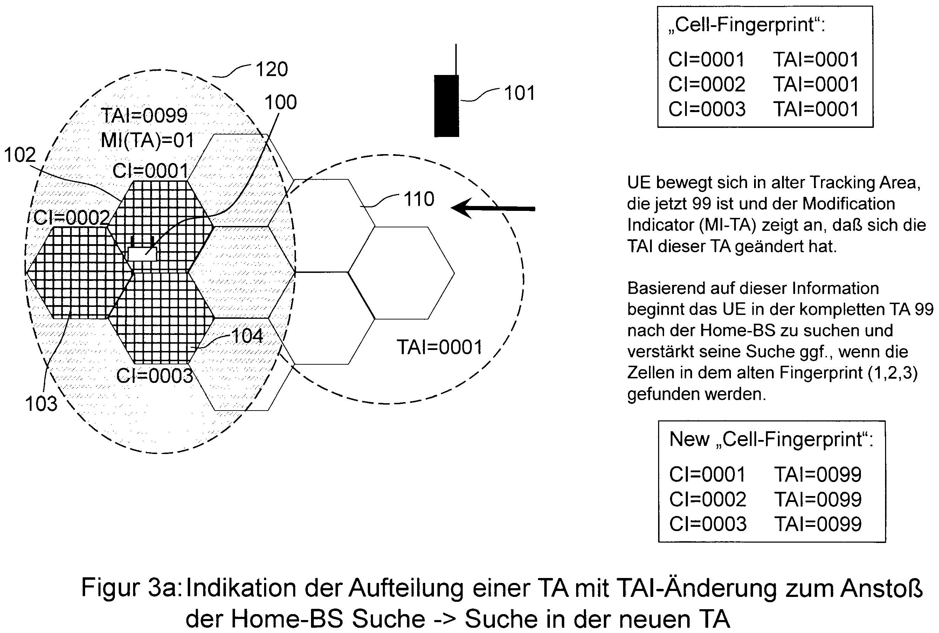

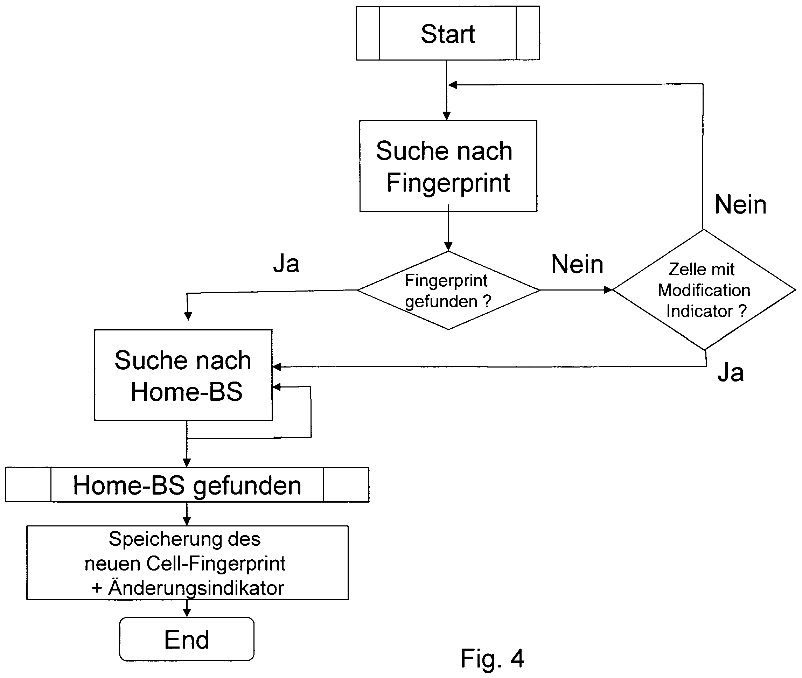

Den schematischen Ablauf des erfindungsgemäßen Verfahrens zeigt Figur 4. Das Flussdiagramm gemäß Figur 4 wird nachfolgend beispielhaft erläutert.

Wird beispielsweise die Cell ID 104 der Zelle 00004 auf 00010 geändert, würde ein Mobilfunkendgerät 101 welches den ursprünglichen Cell Fingerprint (siehe oben) nutzt die Suche nach der Home-BS 100 nicht anstoßen.

**Änderung einer Zelle (Cell ID) des ursprünglichen "Cell Fingerprint":**

| | |
|---|---|
| CI = 00001 | TAI = 00001 |
| CI = 00002 | TAI = 00001 |
| CI = 00003 | TAI = 00001 |
| CI = 000**10** | TAI = 00001 |
| CI = 00005 | TAI = 00002 |
| CI = 00006 | TAI = 00002 |

Gemäß des erfindungsgemäßen Verfahrens wird, da die Cell ID einer Zelle von 00004 auf 00010 geändert wurde, ein zusätzlichen Modifikations-Indikator (Value Tag) ausgesendet, mit der Information, dass sich (kürzlich) die eigene Cell ID der Macro-Zelle geändert hat. Hierdurch wird dem Mobilfunkendgerät eine zusätzliche Hilfestellung gegeben, trotz des Nichtauffindes des eigentlichen ursprünglichen Cell Fingerprints, dennoch eine Suche nach der eigenen Home-BS anzustoßen.

Sind entsprechend mehrere Cell IDs geändert worden, würde jede der Zellen 102, 103, 104 diesen zusätzlichen Indikator ausstrahlen und das Mobilfunkendgerät 101 müsste in einem entsprechend größeren geografischen Bereich nach der eigenen Home-BS 100 suchen.

Entsprechend wird ein weiterer separater Indikator erfindungsgemäß vorgeschlagen für den Fall dass sich die Tracking Area Identität (TAI) 120 einer der Makrozellen 102, 103, 104 geändert hat (beispielsweise durch eine Aufteilung einer größeren TA in mehrere kleinere). Der Änderungindex in einer TA 120 führt zur Suche des Mobilfunkendgerätes 101 innerhalb der gesamten TA 120 bis die eigene Home-BS 100 erfolgreich wieder gefunden wurde (siehe Flussdiagramm in Figur 4). Anschließend wird das Mobilfunkendgerät 101 den neuen Cell-Fingerprint zusammen mit der Änderungskennung zur weiteren Lokalisierung der eigenen Home-BS 100 intern abspeichern und für weitere Suchen nach der eigenen Home-BS verwenden.

Die Verwendung von mehr als einem abgespeicherten "Cell-Fingerprint" wird nicht ausgeschlossen. Die Implementierungsoption erlaubt mehr als einen "Cell-Fingerprint" pro Home-BS 100, wie auch die Speicherung von mehreren "Cell-Fingerprints" für verschiedene Home-BS 100.

Das vorgeschlagene Verfahren ermöglicht als alternative Ausführung auch die Implementierung in der Home-BS (z. B. realisiert durch einen eingebauten Receiver zur Vermessung der Macro-Zellen) an sich, um beispielsweise bei einer Änderung der Macrozellen-Konstellation einen Rückschluß auf die Änderung der Platzierung der Home-BS zuzulassen. Hierzu speichert auch die Home-BS einen entsprechenden "Cell-Fingerprint" des umgebenden Mobilfunknetzes (ggf. erweitert mit zusätzlichen Paramtern wie bspw. der PLMN ID) und nutzt diese Informationen um sich selbständig zu deaktivieren, wenn sich der "Cell-Fingerprint" geändert hat, ohne, dass sich auch der Modifikations-Indikator geändert hat. Speziell bei Heranziehung der PLMN ID des Macrozellen-Netzwerkes ist dieses ein sicherer Indikator, dass die Home-BS in einem anderen Land in Betrieb genommen wurde. Eine Änderung des "Cell-Fingerprints" bei gleicher PLMN ID weist auf eine Änderung des Standortes innerhalb des gleichen Landes hin. Die Deaktivierung der Home-BS bei Änderung des Standortes kann somit automatisch erfolgen.

## Patentansprüche

1. Verfahren zur geografischen Lokalisierung eines Mobilfunkendgerätes (101) innerhalb eines zellularen Mobilfunknetzes (110) zur Auffindung einer Home-Basisstation (100), wobei jede Zelle (102, 103, 104) des Mobilfunknetzes (110) anhand einer Kennung enthaltend eine Zellidentifikation und eine Gebietsidentifikation identifizierbar ist und wobei eine Kennung ausgesendet wird und wobei das Mobilfunkendgerät (101) geeignet ist, derartige Kennungen zu empfangen und zu verarbeiten und eine oder mehrere Kennungen abzuspeichern, wobei eine geografische Lokalisierung des Mobilfunkendgerätes (101) innerhalb des zellularen Mobilfunknetzes (110) durch einen Vergleich der aktuell empfangenen Kennung mit einer oder mehreren abgespeicherten Kennungen erfolgt, um bei einer Übereinstimmung eine geografische Nähe zur Home-Basisstation (100) festzustellen und eine Suche der Home-Basisstation zu starten, **dadurch gekennzeichnet, dass** bei einer Modifikation der Zellidentifikation und/oder der Gebietsidentifikation der Kennung einer Zelle (102, 103, 104) eine Zusatzinformation an das Mobilfunkendgerät (101) übermittelt wird, und dass bei einem Empfang einer eine Modifikation einer Identifikation anzeigenden Zusatzinformation die Suche des Mobilfunkendgerätes (101) nach der Home-Basisstation trotz Änderung des Mobilfunknetzes (100) ausgelöst wird, und dass bei Wiederauffinden der gesuchten Home-Basisstation (100) die modifizierte Kennung vom Mobilfunkendgerät (101) empfangen und als neue Kennung anstelle der alten Kennung abgespeichert wird.

2. Verfahren nach Anspruch 1, **dadurch gekennzeichnet, dass** bei Identifikation einer in dem Mobilfunkendgerät (101) abgespeicherten geografischen Position die Suche des Mobilfunkendgerätes (101) nach der Home-Basisstation (100) ausgelöst wird.

3. Verfahren nach Anspruch 1 oder 2, **dadurch gekennzeichnet, dass** die von dem zellularen Mobilfunknetz (110) an das Mobilfunkendgerät (101) übermittelten Kennungen zusätzliche geografische Informationen aufweisen.

4. Verfahren nach einem der vorherigen Ansprüche, **dadurch gekennzeichnet, dass** die Zusatzinformation eine Modifikation der Zellidentifikation einer Makrozelle (102, 103, 104) in dem zellularen Mobilfunknetz anzeigt.

5. Verfahren nach einem der vorherigen Ansprüche, **dadurch gekennzeichnet, dass** die Zusatzinformation eine Modifikation der Gebietsidentifikation (120) einer Makrozelle (102, 103, 104) in dem zellularen Mobilfunknetz (110), insbesondere eine Modifikation der Tracking Area Identität (TAI) oder der Location Area Identität (LAI) oder der Routing Area Identität (RAI) einer Makrozelle (102, 103, 104) in dem zellularen Mobilfunknetz (110) anzeigt.

6. Verfahren nach einem der vorherigen Ansprüche, **dadurch gekennzeichnet, dass** die Zusatzinformation jeweils nach einer Modifikation einer Zellidentifikation und/oder einer Gebietsidentifikation auf einem Broadcastkanal BCH des zellularen Mobilfunknetzes (110) übermittelt werden.

7. Verfahren nach einem der vorherigen Ansprüche, **dadurch gekennzeichnet, dass** die Zusatzinformation nicht in binärer Form sondern in inkrementer Form umfassend zumindest zwei Werte übertragen wird.

8. Verfahren nach einem der vorherigen Ansprüche, **dadurch gekennzeichnet, dass** zumindest eine Kennung einer bestimmten Zelle (102, 103, 104) zur Identifikation einer geografischen Position in der geografischen Nähe oder in Reichweite einer bestimmten Basisstation (100) in dem Mobilfunkendgerät (101) abgespeichert wird.

9. Verfahren nach einem der vorherigen Ansprüche, **dadurch gekennzeichnet, dass** es sich bei dem Mobilfunkendgerät (101) um eine Basisstation (100) handelt, die eine computernetzbasierte Verbindung zu dem Mobilfunknetz (110) aufweist, und die bei der Detektion eines Ortswechsels der Basisstation (100) deaktiviert wird.

10. Computerprogrammprodukt umfassend ein auf einer Recheneinheit lauffähiges Computerprogramm, welches das Verfahren nach einem der vorherigen Ansprüche durchführt, wenn es auf einer Recheneinheit ausgeführt wird.

## Claims

1. Method for geographical localization of a mobile radio terminal (101) within a cellular mobile radio network (110) for finding a home base station (100), wherein each cell (102, 103, 104) of the mobile radio network (110) is identifiable by means of an identifier containing a cell identification and an area identification and wherein an identifier is transmitted and wherein the mobile radio terminal (101) is suitable, to receive and process such identifiers and to store one or more identifiers, wherein geographically locating the mobile radio terminal (101) within the cellular mobile radio network (110) is performed by comparing the currently received identifier with one or more stored identifiers, in order to determine a geographical proximity to the home base station (100) and to trigger a search for the home base station in the event of a match, **characterized in that** an additional information is transmitted to the mobile radio terminal (101) in the event of a modification of the cell identification and/or the area identification of the identifier of a cell (102, 103, 104), and **in that** when an additional information indicating a modification of an identification is received, the search of the mobile radio terminal (101) for the home base station (100) is triggered despite the modification of the mobile radio network, and **in that** when the searched home base station (100) is found again, the modified identifier is received and is stored by the mobile radio terminal (101) as a new identifier in place of the old identifier.

2. Method 2 according to claim 1, **characterized in that**, when a geographical position stored in the mobile radio terminal (101) is identified, the search of the mobile radio terminal (101) for the home base station (100) is triggered.

3. Method according to claim 1 or 2, **characterized in that** the identifiers transmitted from the cellular mobile radio network (110) to the mobile radio terminal (101) have additional geographical information.

4. Method according to one of the previous claims, **characterized in that** the additional information indicates a modification of the cell identification of a macrocell (102, 103, 104) in the cellular mobile radio network.

5. Method according to one of the preceding claims, **characterized in that** the additional information indicates a modification of the area identification (120) of a macrocell (102, 103, 104) in the cellular mobile radio network (110), in particular a modification of the tracking area identity (TAI) or the location area identity (LAI) or the routing area identity (RAI) of a macrocell (102, 103, 104) in the cellular mobile radio network (110).

6. Method according to one of the preceding claims, **characterized in that** the additional information is transmitted in each case after a modification of a cell identification and/or an area identification on a broadcast channel BCH of the cellular mobile radio network (110).

7. A method according to one of the previous claims, **characterized in that** the additional information is transmitted not in binary form but in incremental form comprising at least two values.

8. Method according to one of the previous claims, **characterized in that** at least one identifier of a specific cell (102, 103, 104) for identifying a geographical position in the geographical vicinity or within range of a specific base station (100) is stored in the mobile radio terminal (101).

9. A method according to one of the previous claims, **characterized in that** the mobile radio terminal (101) is a base station (100) having a computer network-based connection to the mobile radio network (110) and being deactivated upon detection of a change of location of the base station (100).

10. A computer program product comprising a computer program executable on a computing unit which performs the method according to one of the preceding claims when executed on a computing unit.

## Revendications

1. Procédé de localisation géographique d'un terminal radio mobile (101) à l'intérieur d'un réseau radio mobile cellulaire (110) pour localiser une station de base domestique (100), chaque cellule (102, 103, 104) du réseau radio mobile (110) est identifiable au moyen d'un identificateur contenant une identification de cellule et une identification de région, et un identificateur est diffusé et le terminal radio mobile (101) étant approprié, pour recevoir et procéder de tels identificateurs et pour mémoriser un ou plusieurs identificateurs, une localisation géographique du terminal radio mobile (101) dans le réseau radio mobile cellulaire (110) est effectuée en comparant l'identificateur actuellement reçu avec un ou plusieurs identificateurs mémorisés pour déterminer une proximité géographique de la station de base domestique (100) et pour déclencher une recherche de la station de base domestique en cas de correspondance, **caractérisé en ce que** une information supplémentaire est transmis au terminal radio mobile (101) en cas de modification de l'identification de la cellule et/ou de l'identification de région de l'identificateur d'une cellule (102, 103, 104), et **en ce que**, lors de la réception d'une information supplémentaire indiquant une modification d'une identification, la recherche du terminal radio mobile (101) pour la station de base domestique (100) est déclenchée malgré un changement dans le réseau radio mobile, et **en ce que**, lorsque la station de base domestique recherchée (100) est retrouvée, l'identificateur modifié est reçu par le terminal radio mobile (101) et est mémorisé comme nouvel identifiant à la place de l'ancien.

2. Procédé selon la revendication 1, **caractérisé en ce que**, lorsqu'une position géographique mémorisée dans le terminal radio mobile (101) est identifiée, une recherche du terminal radio mobile (101) pour la station de base d'origine (100) est déclenchée.

3. Procédé selon la revendication 1 ou 2, **caractérisé en ce que** les identificateurs transmis du réseau radio mobile cellulaire (110) au terminal radio mobile (101) comportent des informations géographiques supplémentaires.

4. Procédé selon l'une des revendications précédentes, **caractérisé en ce que** l'informations supplémentaire indique une modification de l'identification de cellule d'une macrocellule (102, 103, 104) dans le réseau radio mobile cellulaire.

5. Procédé selon l'une des revendications précédentes, **caractérisé en ce que** l'information supplémentaire indique une modification de l'identification de région (120) d'une macrocellule (102, 103, 104) dans le réseau radio mobile cellulaire (110), en particulier une modification de l'identité de région de poursuite (TAI) ou de l'identité de localisation (LAI) ou de l'identité de région de routage (RAI) d'une macrocellule (102, 103, 104) du réseau radio mobile (110) cellulaire.

6. Procédé selon l'une des revendications précédentes, **caractérisé en ce que** l'information supplémentaire est transmise à chaque fois après une modification d'une identification de cellule et/ou d'une identification de région sur un canal de diffusion BCH du réseau radio mobile (110) cellulaire.

7. Procédé selon l'une des revendications précédentes, **caractérisé en ce que** le information supplémentaire est transmise non pas sous forme binaire mais sous forme incrémentale comprenant au moins deux valeurs.

8. Procédé selon l'une des revendications précédentes, **caractérisé en ce qu'**au moins un identificateur d'une cellule spécifique (102, 103, 104) pour identifier une position géographique à proximité géographique ou à portée d'une station de base spécifique (100) est enregistré dans le terminal radio mobile (101).

9. Procédé selon l'une des revendications précédentes, **caractérisé en ce que** le terminal radio mobile (101) est une station de base (100) ayant une connexion au réseau radio mobile (110) basée sur un réseau informatique, et est désactivé lors de la détection d'un changement de localisation de la station de base (100).

10. Produit de programme d'ordinateur comprenant un programme d'ordinateur exécutable sur une unité de calcul qui exécute le procédé selon l'une des revendications précédentes lorsqu'il est exécuté sur une unité de calcul.
